# EUROPÄISCHE PATENTANMELDUNG

(11) **EP 2 311 696 A1**
(43) Veröffentlichungstag der Anmeldung: **20.04.2011**
(21) Anmeldenummer: 10013661.3
(22) Anmeldetag: 14.10.2010
(51) Int. Cl.: B60T 3/00, B66F 7/24

(54) **Unterlegelement zum Aufbocken eines Kraftfahrzeuges, eines Wohn- oder Verkaufsanhängers oder eines Wohnmobils**

(30) Priorität: 19.10.2009 DE 102009049681
(71) Anmelder: Gudat, Kurt, 47445 Moers (DE)
(72) Erfinder: Gudat, Kurt, 47445 Moers (DE)
(74) Vertreter: Schmidt, Karl Michael

(57) **Zusammenfassung**

Unterlegelement zum Aufbocken eines Kraftfahrzeuges, eines Wohn- oder Verkaufsanhängers oder eines Wohnmobils, gemäß Oberbegriff des Patentanspruches 1. Um hierbei zu erreichen, dass ein variables und stabiles System entsteht, ist erfindungsgemäß vorgeschlagen, dass das Unterlegelement auf einer flachen Oberseite mit hervorstehenden Strukturen und auf der gegenüberliegenden Unterseite mit demensprechenden komplementären eingezogenen Strukturen versehen ist.

## Beschreibung

Die Erfindung betrifft ein Unterlegelement zum Aufbocken eines Kraftfahrzeuges, eines Wohn- oder Verkaufsanhängers oder eines Wohnmobils gemäß Oberbegriff des Patentanspruches 1.

Aus der DE 20 2009 004 719 ist ein sogenannter Unterlegkeil für eine Kraftfahrzeug oder einen Wohnanhänger bekannt.

Dieser ist als Keil ausgebildet, und dient dazu das Fahrzeug in unebenem oder rutschigen Gelände gerade auszurichten. Dies ist insbesondere bei Wohnwagen und Wohnmobilen wichtig, um das Fahrzeug so abzustellen, dass der Wohnraum komfortabel und gerade ausgerichtet ist.

Diese Keile haben zwar die Wirkung, dass man das Fahrzeug beliebig auf den Keil auffahren kann, und damit eine gewünschte Aufbockhöhe erreicht. Nachteilig ist jedoch, dass man an die Höhenmaße der Keile gebunden ist. Weiterhin sind aus der EP 1 340 710 A1 Unterlegelemente bekannt, die mit hervorstehenden Strukturen an der Oberseite und komplementären Strukturen an der Unterseite versehen sind. Dabei sind die Unterlegelemente aber entweder in durchgehender Gitterstruktur ausgeführt, oder in Massivbauweise.

Im erstgenannten Fall ergibt sich eine zu starke Verwindungsneigung der Unterlegeelemente. Im zweitgenannnten Fall wird zuviel Material vergeudet und die Elemente werden deutlich schwerer.

Aus der US 4 819 910 A, US 3 661 229 A, sowie der DE 40 08 139 A1 sind ähnliche Konstruktionen bekannt, die dieselben oben genannten Mängel aufweisen.

Der Erfindung liegt daher die Aufgabe zugrunde, ein Unterlegelement der gattungsgemäßen Art dahingehend weiter zu entwickeln, dass ein variables und stabiles System entsteht.

Die gestellte Aufgabe wird bei einem Unterlegelement der gattungsgemäßen Art erfindungsgemäß dadurch gelöst, dass das Unterlegelement auf einer flachen Oberseite mit hervorstehenden Strukturen und auf der gegenüberliegenden Unterseite mit dementsprechenden komplementären eingezogenen Strukturen versehen ist.

Dadurch entsteht eine Art Baukastensystem aus einer Mehrzahl von Unterlegelementen, welche gerade oder pyramiden- oder rampenförmig aufeinander stapelbar sind. Daraus ergibt sich gemäß der vorteilhaften Ausgestaltung, dass eine Mehrzahl von Unterlegelementen vorgesehen sind, welche zu einem lateral verschiebungsgesicherten Ensemble aufstapelbar sind, derart, dass die hervorstehenden Strukturen der Oberseite eines unteren Unterlegelement zumindest teilform- oder teilrandschlüssig in die eingezogenen Strukturen der Unterseite des darauf aufgelegten Unterlegelementes hineingreifen.

Damit können Rampen in beliebiger Höhe durch Aufstapeln, sogar durch versetztes Aufstapeln aufgebaut werden. Dies mit dem angestrebten funktionellen Vorteil, dass das oberste Element, oder die obersten Elemente immer eine waagerechte Ebene ergibt, wodurch ein Zurückrollen des/der drauf stehenden Rades oder Räder unterbunden wird.

Die einzelnen Elemente der Rampe sind dabei lateral verschiebungssicher gestapelt. Die hervorstehenden Strukturen greifen dabei in die komplementären eingezogenen Strukturen der aufgelegten Unterlegelemente ein und geben damit diese laterale verschiebungssicherheit.

In vorteilhafter Ausgestaltung ist angegeben, dass die hervorstehenden Strukturen Kreisscheibenelemente sind, und die eingezogenen Strukturen entsprechend kreisscheibenförmige Ausnehmungen sind.

Alternativ dazu können die hervorstehenden Strukturen quadratisch sein, und die eingezogenen Strukturen entsprechend quadratische Ausnehmungen sein.

Eine weitere Alternative ist, dass die hervorstehenden Strukturen auf der Oberfläche regelmäßig wiederholte Strukturen sind, und die eingezogenen Strukturen entsprechend regelmäßig angeordnete komplementäre Strukturen sind. Hierzu gehören auch regelmäßige schräge Stufen oder Zacken etc. Wichtig ist auch hierbei nur, dass die dementsprechend regelmäßig angeordneten eingezogenen Strukturen der Unterseite des oben aufgelegten Unterlegelementes in die hervorstehenden Strukturen des unteren Unterlegelementes hineingreifen.

In weiterer vorteilhafter Ausgestaltung ist vorgesehen, dass mindestens zwei Strukturen so auf bzw im Unterlegelement platziert sind, dass auf zwei nebeneinanderliegende Unterlegelemente ein baugleiches weiteres Unterlegelement auflegbar ist, derart, dass das aufgelegte Unterlegelement sowohl das eine als auch das andere untere Unterlegelement teilweise überdeckt. So können nicht nur beliebig hohe hohe Stapel erzeugt werden, sondern so können auch beliebige Rampen zusammengestellt werden, um leichter auf die gewünschte Höhe auffahren zu können.

Die Erfindung besteht nunmehr darin, dass die Oberseite mit einer weitestgehend geschlossenen Oberfläche und der Kern mit einer Stegstruktur versehen ist, die so gestaltet ist, dass die äußere Randform der Ausformungen zumindest teilweise als wiederholte Struktur in der Stegstruktur ausgeformt ist.

Dies bedeutet folgendes. Die Kombination von materialsparender Wabenstruktur mit der Ausbildung einer geschlossenen Oberfläche erhöht sich die Biegesteifigkeit gegenüber einer durchgehenden Wabenstruktur, durch die man hindurch sehen kann d.h. ohne geschlossene Oberfläche, wie in der EP 1 340 710 A1 gezeigt, enorm.

Auf diese Weise ist mit dem erfindungsgemäßen Unterlegeelement nun eine hohe Statik, eine hohe Biege- oder Verwindungssteifheit, sowie eine dennoch materialsparende Bauform erzielt.

Dadurch dass die Unterlegelemente gleich ausgestaltet sind, können diese übereinander, sogar versetzt übereinander gestapelt werden, so dass sich Rampen individuell gestaltbarer Höhen ergeben.

Bei hohen Fahrzeuggewichten, kommt es somit bei Belastung nur noch zu kleinen Biegungen. Für den Fall dass auf so zusammensteckten Rampen Fahrzeuge und/oder Anhänger längere Zeit abgestellt sind, kann die besagte verbleibende kleine Biegbarkeit dazu führen, dass sich die gestapelten Unterlegeelemente im Bereich der in die Einformungen eingreifenden Ausformungen leicht ineinander verkeilen. Um diese jedoch leicht voneinander lösen zu können, um die so zusammengebaute Rampe wieder zum Tranport zu vereinzeln, sind seitlich in die Unterlegeelemente Einformungen oder Hinterschneidungen integriert, derart, dass diese integrierte Griffmulden ergeben.

In weiterer vorteilhafter Ausgestaltung ist vorgesehen, dass die Oberflächen der Unterlegelemente aufgerauht oder mit einer rutschsichernden Strukturierung versehen sind.

Dabei können die erfindungsgemäßen Unterlegelemente aus Holz, Metall oder Kunststoff bestehen.

Bei Kunststoff ist es vorteilhaft zur mechanischen Aussteifung integrierte Armierungselemente vorzusehen.

In letzter vorteilhafter Ausgestaltung ist vorgesehen, dass die Unterlegelemente seitliche am Rand integrierte Hinterschneidungsbereiche aufweisen, die als Griffe dienen. So können die auch aufgestapelten flachen Unterlegelemente besser gegriffen und gehandhabt werden.

Ein Ausführungsbeispiel ist in der Zeichnung dargestellt und nachfolgend näher erläutert.

Es zeigt.
Figur 1: Seitenansicht eines Unterlegelementes
Figur 2: Seitenansicht eines gestapelten Ensembles
Figur 3 zeigt Details des Unterlegelementes

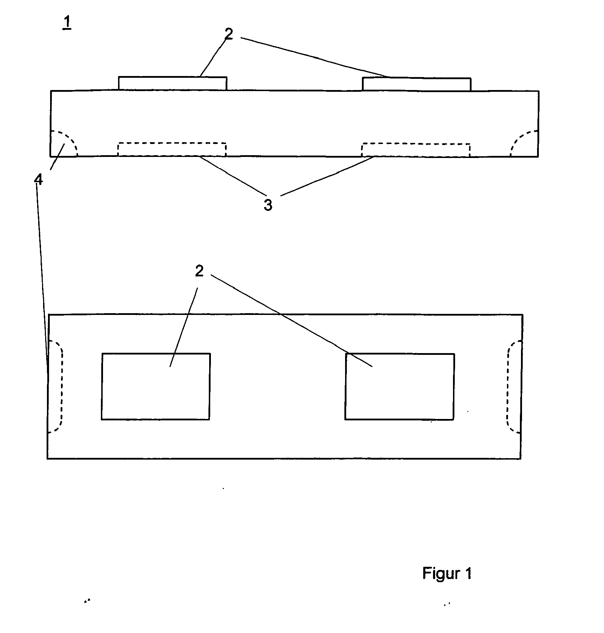

Figur 1 zeigt in Seitenansicht ein erfindungsgemäßes Unterlegelement 1. Die Oberseite ist dabei mit hervorstehenden Strukturen 2 versehen, und die Unterseite mit eingezogenen Strukturen 3. Da alle Unterlegelemente 1 eines Ensembles gleich ausgestaltet sind. Können sie nun so aufeinander gestapelt werden, wobei die hervorstehenden Strukturen 2 der einen Platte oder Unterlegelement in die eingezogenen Strukturen 3 des anderen Elementes zumindest teilformschlüssig hineingreifen, und so die lateral Verrutschsicherung ergeben. Figur 1 zeigt bereits jeweils 2 solcher Strukturen.

Seitlich eingeformt sind Vertiefungen oder Ausnehmungen 4, die als Griffe zur Handhabung der Unterlegelemente dienen.

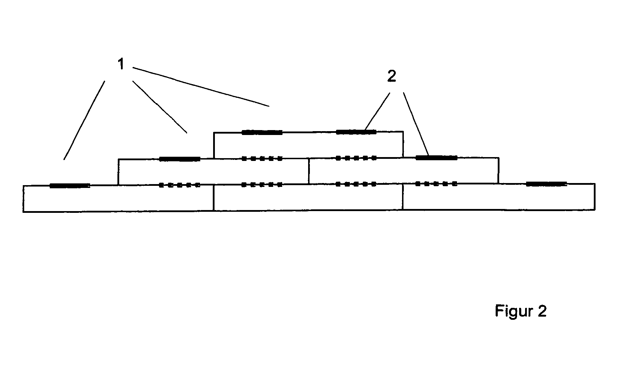

Diese sind dabei so angeordnet, dass man eine gemäß Figur 2 dargestellte Rampe auch durch versetztes Aufeinanderlegen erreichen kann.

Zur Ausführung der Erfindung gehört somit eine Mehrzahl solcher Unterlegelemente, Bspw 10 Stück, um solche variablen Rampen sehr schnell erstellen zu können.

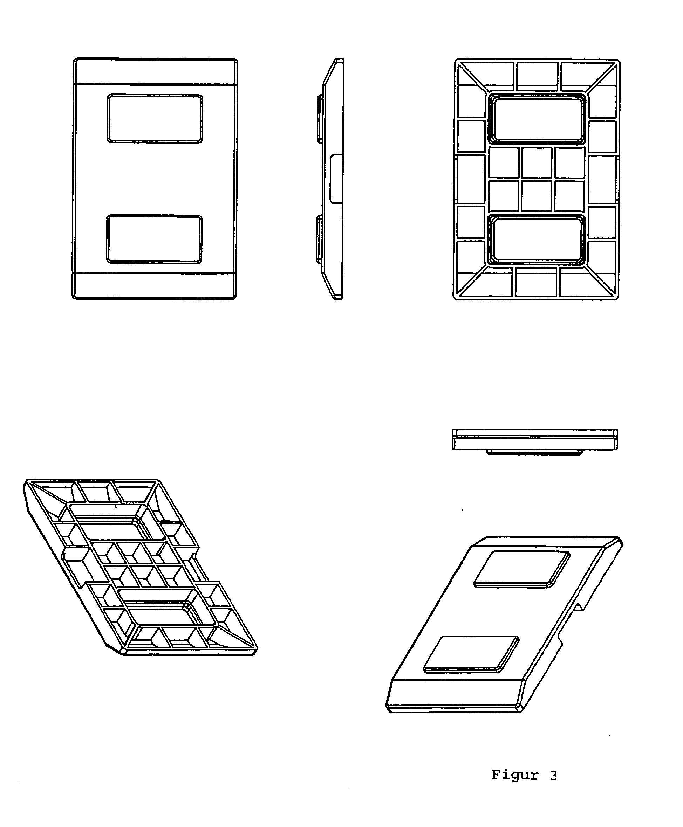

Figur 3 zeigt die erfindungsgemäße Ausführungsform der Unterlegelemente Dabei ist zu erkennen, dass diese auf der Oberseite eine geschlossene Oberfläche haben. Die Unterseite ist offen und der Kern des Unterlegeelemente ist mit einer Wabenstruktur versehen.

Die Ausformungen an der Oberseite und die Einformungen an der Unterseite sind hierbei viereckig mit abgerundeten Ecken ausgestaltet. Die Abrundung der Ecken, d.h. die Vermeidung spitzer Kantenbereiche bewirkt eine deutliche Reduktion von Klemmungen beim Zusammenstecken oder Vereinzeln.

Eine größere Verwindungssteifigkeit ergibt sich nunmehr dadurch, dass die Wabenstruktur auch viereckig ist und zunächst um die Einformungen herum eine statische Stützlinie verläuft. Dies teilt die Struktur in einen inneren und einen äußeren Bereich. Beide sind dann im wesentlichen mit ebenfalls viereckiger Wiederholstruktur gefüllt, wobei die Kantenlängen dieser Struktur kleiner als die der Ausformungen bzw Einformungen gestaltet sind. Durch die so verlaufenden Materialstege ist in Bezug auf die Geometrie der Ein- und Ausformungen eine optimale laterale Versteifung gegeben.

Diese ist erheblich effektiver als eine Strukturierung, wie sie aus der EP 1 340 710 A1 bekannt ist. Die dort angegebene Spinnennetzstruktur führt zu einer resultierenden Verwindung, immer dann wenn die Ausformungen von außen gewichtsmäßig belastet werden. Dem wirkt die hier vorliegende Bauform mit viereckiger Strukturierung in Verbindung mit einer geschlossen Seite, nämlich der Oberseite und weitestgehend der Seitenfläche völlig entgegen.

Offen ist somit nur noch die Unterseite.

Ein weiterer Aspekt sind die eingeformten Gruffmulden. Diese sind aus den Seitenflächen ausgenommen. Statisch gesehen würden diese die Verwindungssteifigkeit reduzieren, weil die Kraftschlüssigkeit einer durchgehenden Seitenfläche dort geschwächt wird. Dies ist aber durch die erfindungsgemäße Gesamtgestaltung wieder kompensiert. Zum einen mündet die Griffmulde nur in eine sozusagen sich ergebende Kammer, zum anderen wird die dort durchbrochene Seitenfläche statisch wieder kompensiert, durch die dazu im Inneren parallel verlaufende Fläche des dort verlaufenden Steges.

Somit ergibt sich, dass die erfindungsgemäße Kombinationen der Merkmale einen Effekt erzielt, der über die Summe der Einzeleffekte weit hinaus geht.

Auf diese Weise sind die für die spätere Vereinzelung notwendigen Griffmulden so integriert, dass sie die ursprünglich beabsichtigte hohe Verwindungssteifigkeit nicht beeinträchtigen.

Überdies hat diese erfindungsgemäße Bauform nicht nur die oben ausgeführten statischen und funktionellen Vorteile, sondern kann aufgrund der Tatsache, dass die Unterlegeelemente unten offen sind mitsamt der Strukturierung im Inneren, in einem Schritt durch Kunststoffspritzguss gefertigt werden.

Hierzu stehen folgende Materialien zur Verfügung:
- PE Polyethylen
- LPDE Polyethylen geringerer Dichte
- PA Polyamid, mittlerweile spritzbares PA
- PU Polyurethan, mitterweile spritzbares PU

Somit ist das gesamte System einfach herzustellen.

## Patentansprüche

1. Unterlegelement zum Ausbocken eines Kraftfahrzeuges, eines wohn- oder Verkaufsanhängers oder eines Wohnmobils, auf welche die Räder der besagten Fahrzeuge beim Abstellen zum Ausgleich von Geländeunebenheiten aufgefahren werden können, und die Unterlegeelemente auf der Oberseite mit hervorstehenden Strukturen und auf der Unterseite mit dementsprechenden komplementären eingezogenen Strukturen versehen ist,
**dadurch gekennzeichnet,**
**dass** die Oberseite mit einer weitestgehend geschlossenen Oberfläche und der Kern mit einer Stegstruktur versehen ist, die so gestaltet ist, dass die äußere Randform der Ausformungen zumindest teilweise als wiederholte Struktur in der Stegstruktur ausgeformt ist.

2. Unterlegelement nach Anspruch 1,
**dadurch gekennzeichnet,**
**dass** eine Mehrzahl von Unterlegelementen vorgesehen sind, welche zu einem lateral verschiebungsgesicherten Ensemble aufstapelbar sind, derart, dass die hervorstehenden Strukturen (2) der Oberseite eines unteren Unterlegelement zumindest teilform- oder teilrandschlüssig in die eingezogenen Strukturen (3) der Unterseite des darauf aufgelegten Unterlegelementes hineingreifen.

3. Unterlegelement nach Anspruch 1 oder 2,
**dadurch gekennzeichnet,**
**dass** die hervorstehenden Strukturen (2) Kreisscheibenelemente sind, und die eingezogenen Strukturen (3) entsprechend kreisscheibenförmige Ausnehmungen sind.

4. Unterlegelement nach Anspruch 1 oder 2,
**dadurch gekennzeichnet,**
**dass** die hervorstehenden Strukturen (2) quadratisch sind, und die eingezogenen Strukturen (3) entsprechend quadratische Ausnehmungen sind.

5. Unterlegelement nach Anspruch 1 oder 2,
**dadurch gekennzeichnet,**
**dass** die hervorstehenden Strukturen (2) regelmäßig auf der Oberfläche wiederholte Strukturen sind, und die eingezogenen Strukturen (3) entsprechend regelmäßig angeordnete komplementäre Strukturen sind.

6. Unterlegelement nach einem der vorhergehenden Ansprüche,
**dadurch gekennzeichnet,**
**dass** mindestens zwei Strukturen so auf bzw im Unterlegelement (1) platziert sind, dass auf zwei nebeneinanderliegende Unterlegelemente ein baugleiches weiteres Unterlegelement auflegbar ist, derart, dass das aufgelegte Unterlegelement sowohl das eine als auch das andere untere Unterlegelement teilweise überdeckt.

7. Unterlegelement nach einem der vorhergehenden Ansprüche,
**dadurch gekennzeichnet,**
**dass** die Oberflächen der Unterlegelemente (1) aufgerauht oder mit einer rutschsichernden Strukturierung versehen sind.

8. Unterlegelement nach einem der vorhergehenden Ansprüche,
**dadurch gekennzeichnet,**
**dass** die Unterlegelemente (1) aus Holz bestehen.

9. Unterlegelement nach einem der vorhergehenden Ansprüche,
**dadurch gekennzeichnet,**
**dass** die Unterlegelemente (1) aus Metall bestehen.

10. Unterlegelement nach einem der vorhergehenden Ansprüche,
**dadurch gekennzeichnet,**
**dass** die Unterlegelemente (1) aus Kunststoff bestehen.

11. Unterlegelement nach Anspruch 10,
**dadurch gekennzeichnet,**
**dass** der Kunststoff integrierte Armierungselemente enthält.

12. Unterlegelement nach einem der vorhergehenden Ansprüche,
**dadurch gekennzeichnet,**
**dass** die Unterlegelemente (1) seitliche am Rand integrierte Hinterschneidungsbereiche (4) aufweisen, die als Griffe dienen.
